Europäisches Patentamt

European Patent Office

Office européen des brevets

(19)

(11) Numéro de publication: **0 006 780**
**B1**

(12)    **FASCICULE DE BREVET EUROPEEN**

(45) Date de publication du fascicule de brevet: **10.06.81**    (51) Int. Cl.³: **G 03 B 41/18**

(21) Numéro de dépôt: **79400348.3**

(22) Date de dépôt: **31.05.79**

(54) **Changeur de feuilles de film nu précoupé et appareil de radiodiagnostic comportant un tel changeur.**

(30) Priorité: **23.06.78 FR 7818837**

(43) Date de publication de la demande:
**09.01.80 Bulletin 80/1**

(45) Mention de la délivrance du brevet:
**10.06.81 Bulletin 81/23**

(84) Etats Contractants Désignés:
**BE DE FR IT SE**

(56) Documents cités:
**FR - A - 1 571 792**
**GB - A - 722 443**
**GB - A - 1 071 940**
**US - A - 2 872 585**

(73) Titulaire: **COMPAGNIE GENERALE DE RADIOLOGIE**
**13 square Max-Hymans**
**F-75741 PARIS CEDEX 15 (FR)**

(72) Inventeur: **Caugant, Jean**
**"THOMSON-CSF" - SCPI 173, bld Haussmann**
**F-75360 Paris Cedex 08 (FR)**
Inventeur: **Dale, Jacques**
**"THOMSON-CSF" - SCPI 173, bld Haussmann**
**F-75360 Paris Cedex 08 (FR)**

(74) Mandataire: **Schmolka, Robert et al,**
**"THOMSON-CSF" - SCPI 173, bld Haussmann**
**F-75360 Paris Cedex 08 (FR)**

Courier Press, Leamington Spa, England.

Changeur de feuilles de film nu précoupé et appareil de radiodiagnostic comportant un tel changeur.

La présente invention concerne un changeur de feuilles de film nu, précoupé pour appareil de radiodiagnostic.

Les changeurs connus de ce type comportent un magasin d'alimentation associé à un dispositif de séparation et d'extraction des feuilles de film de la pile, une section d'exposition vers laquelle sont transférées une à une les feuilles de film extraites du magasin d'alimentation pour être placées entre deux plateaux presseurs munis d'écrans renforçateurs et exposées aux rayons X, et un magasin récepteur pour les feuilles de film exposées.

Lorsque l'on utilise des moyens mécaniques, l'extraction d'une feuille de film son transfert vers et dans la section d'exposition, son éjection vers le magasin récepteur et son pressage entre les écrans renforçateurs sont assurés soit par plusieurs moteurs, soit par un seul avec un mécanisme de transmission complexe équipé de coupleurs commandables électriquement. Moteurs et transmissions sont intégrés aux changeurs d'où des appareils lourds, encombrants, peu maniables et complexes, notamment du fait de la parfaite synchronisation nécessaire entre les mouvements des différents éléments mobiles pour assurer des cadences élevées de prise de clichés.

Un changeur de film de ce type a été décrit dans le brevet français No. 1.571.792 (voir préambule de la revendication 1), où des feuilles de film vierge stockées en pile dans un magasin d'alimentation recourbé, situé d'un côté de la section d'exposition, sont extraites un à un de ce magasin et transférées dans celle-ci à l'aide de doigts tournants autour d'un axe mobilisé à l'aide d'un premier embrayage électromagnétique, où le plateau presseur mobile est poussé en direction du plateau fixe à l'aide de ressorts à lame reliés par leurs milieux respectifs par des tiges, lorsque des seconds embrayages électromagnétiques libèrent ces tiges, et éloigné du plateau fixe au moyen d'une paire de cames tournantes, excentrées, déplaçant les tiges axialement, pour y être maintenu à l'aide des seconds embrayages, et où le transfert de la feuille de film exposée vers un magasin récepteur est effectué à l'aide d'une paire de courroies sans fin, tendues entre deux paires de poulies dont l'une est motrice et entraînée à l'aide d'un troisème embrayage. Chacune des courroies est munie de deux doigts en saillie vers l'extérieur, équidistants l'un par rapport à l'autre, et dont l'un sert d'ergot de butée pour arrêter la feuille de film vierge lancée par les doigts tournants du dispositif d'extraction et l'autre sert de poussoir pour éjecter le cliché exposé dans le magasin récepteur également recourbé, situé de l'autre côté de la section d'exposition. L'ensemble est entraîné par un moteur unique à l'aide d'une transmission par courroies et poulies dont les rapports déterminent la synchronisation et dont le séquencement des opérations par la commande successive des embrayages est effectué à l'aide d'un programmateur.

Dans la publication GB-A-722 443, on a décrit un dispositif de prise de clichés, notamment radiographiques permettant l'avancement intermittent d'une bande continue de film stockée en rouleaux, pour l'exposition successive des portions consécutives, selon sa longueur, de sa couche photosensible, à une source de rayonnement. Ce dispositif comporte, à l'intérieur d'un boîtier, un plateau fixe derrière lequel se déroule la bande de film, un plateau mobile pouvant être recouvert d'une couche de matériau luminescent et qui est adapté à être pressé contre la face arrière de la portion du film destinée à être exposée. Le plateau mobile est maintenu éloigné du plateau fixe à l'aide de ressorts pour permettre l'avance du film entre deux prises de vues consécutives et il est poussé vers ce dernier au moyen d'une première came en forme de dent, montée sur un rouleau. Ce même rouleau porte solidairement une seconde came composée d'une surface cylindrique pourvue d'une encoche qui permet de débrayer le mécanisme d'avancement du film pendant que la dent de la première came appuie le plateau mobile contre le plateau fixe. Lorsque la dent de la première came a relâché le plateau mobile qui s'est éloigné du plateau fixe par l'action des ressorts, la surface cylindrique de la seconde came entraîne par fiction un autre rouleau qui est couplé par des courroies à deux rouleaux commandant le transfert de la bande de film, respectivement situés de part et d'autre du champ d'exposition défini par les plateaux presseurs.

Certains autres changeurs connus offrent en outre la possibilité d'utiliser des films de différents formats. Des magasins d'alimentation et des dispositifs d'extraction sont alors associés à chaque format, d'où un encombrement encore plus important et une plus grande complexité.

L'objet de la présente invention est de réaliser un changeur de film simple et peu coûteux, ne comportant pas de mécanismes complexes et de ce fait ne présentant pas ces inconvénients.

Suivant l'invention, un changeur de feuilles de film nu, précoupé pour appareil de radiodiagnostic, comportant: un magasin d'alimentation en film vierge; un dispositif d'extraction de l'une des feuilles empilées du magasin d'alimentation; une section d'exposition comprenant deux plateaux presseurs munis sur leurs faces en regard d'écrans renforçateurs, dont l'un est fixe et l'autre mobile dans une direction sensiblement normale aux plateaux; un dispositif de transfert de la feuille de film extraite du magasin d'alimentation entre les deux plateaux, lorsqu'ils sont écartés l'un de l'autre; et un dispositif d'éjection des clichés exposés dans un magasin récepteur, situé dans un boîtier étanche à la lumière, est caractérisé en ce que le dispositif d'extraction est entraîné de façon intermittente à l'aide de moyens de couplage qui le réunissent au plateau mobile, dont un élément est solidaire de ce dernier et qui transforment le mouvement de va-et-vient rectiligne du plateau mobile, en un mouvement de rotation intermittent qui se produit uniquement lors de chaque mouvement d'écartement de celui-ci par rapport au plateau fixe, afin de présenter alors la feuille supérieure de la pile au dispositif de transfert.

Ceci permet de rendre particulièrement simple la réalisation de l'entraînement du dispositif d'extraction et sa synchronisation avec le mouvement des autres éléments du changeur, d'où une simplification et une sécurité accrue de fonctionnement du fait de l'absence de coupleurs (embrayages électromagnétiques) commandés à l'aide d'un programmateur.

Selon un mode de réalisation préféré de l'invention, le magasin d'alimentation et le magasin récepteur se composent chacun d'une partie plane située au-dessous de la section d'exposition et d'une partie sensiblement semi-cylindrique dont l'extrémité opposée à la partie plane se trouve à proximité, respectivement du dispositif de transfert du film vers la section d'exposition et du dispositif d'éjection.

Cette disposition permet de réduire les dimensions du changeur. En outre, les feuilles de film vierges ayant toujours leur bord avant très proche du dispositif de transfert peuvent être très rapidement amenées dans la section d'exposition.

Selon un autre mode de réalisation préféré de l'invention, le changeur se compose d'une cartouche amovible et interchangeable formée d'un boîtier étanche à la lumière contenant les magasins d'alimentation et récepteur, les plateaux presseurs et le dispositif d'extraction ainsi que les dispositifs de transfert et d'éjection et une partie dite fixe sur laquelle vient se greffer la cartouche amovible et qui comprend des moyens d'entraînement du plateau presseur mobile et des dispositifs de transfert et d'éjection ainsi que les dispositifs de commande et de mesure assurant le fonctionnement du changeur.

La cartouche amovible ne contient ni motorisation, ni circuit électrique ou électronique, elle peut donc être retirée aise-ment, par exemple, pour la chargement ou le déchargement des magasins, et remplacée par une cartouche identique ou une cartouche prévue pour un format différent mais réalisée de façon à s'adapter sur la partie fixe du changeur.

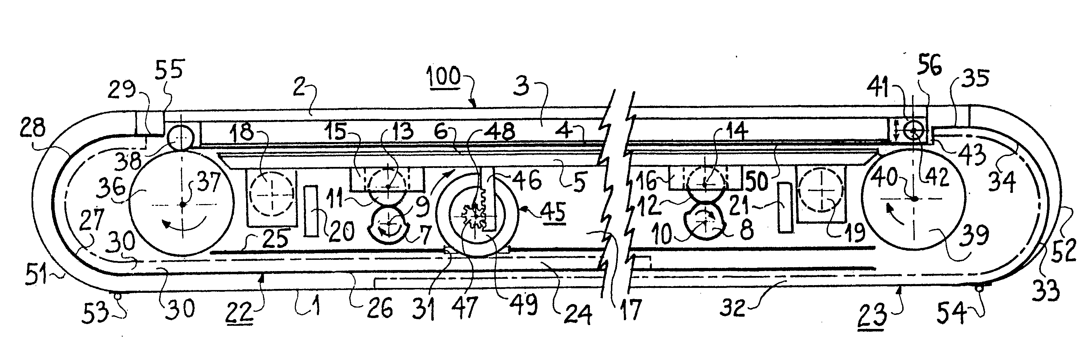

D'autres avantages de l'invention apparaîtront à l'aide de la description ci-après et du dessin annexé, donnés à titre d'exemple, sur lequel la figure unique représente schématiquement une vue latérale en élévation, avec une paroi latérale arrachée, un changeur de film selon l'invention.

Comme le montre la figure, le changeur comporte un boîtier 1 étanche à la lumière dont le dessus 2 ou couvercle est amovible et supporte sur sa face tournée vers l'intérieur un premier plateau presseur fixe 3 muni sur sa face inférieure d'un premier écran renforçateur 4. Le couvercle 2 et le plateau fixe 3 sont réalisés en un matériau transparent aux rayons X, car ils doivent etre disposés en regard d'une source d'un tel rayonnement. Une grille antidiffusante (non représentée) peut être avantageusement insérée entre le dessus 2 du boîtier et le plateau presseur 3. Le forme semi-cylindrique des parois latérales 51, 52 du boîtier 1 représente un mode d'exécution avantageux de celui-ci, dans le but de réduire les risques de blessure du patient lors de certains examens pour lesquels le changeur doit être disposé en contact avec certaines parties du corps. A l'intérieur du boîtier 1, en regard du premier plateau presseur 3 se trouve un second plateau presseur 5 qui est également muni, sur sa face tournée vers le premier plateau 3 (supérieure), d'un second écran renforçateur 6. Ce second plateau 5 est mobile dans la direction normale au plateau fixe 3 pour permettre le pressage de la feuille de film 50 entre les deux écrans renforçateurs 4, 6, lorsque celle-ci est en position d'exposition aux rayons X. Le mouvement du plateau 5 est assuré par deux paires de cames 7 et 8 sur lesquelles viennent s'appuyer deux paires de galets de réaction 11 et 12 dont les axes 13, 14 sont supportés par des paliers 15, 16 fixés à la partie inférieure du second plateau presseur 5 (mobile). Les axes 9 et 10 des paires de cames 7, 8 sont supportés par des paliers (non représentés) fixés aux parois latérales 17 du boîtier 1. Le guidage du mouvement du plateau 5 est assuré par des paires de galets 18, 19, 20 et 21 dont les axes sont supportés par le plateau mobile 5 et qui se déplacent dans des guides (non représentés) solidaires des parois latérales 17 du boîtier 1. D'autre part, le plateau mobile 5 est, de préférence, tiré ou poussé dans le sens de son écartement du plateau fixe 3 à l'aide de ressorts de rappel (non représentés). Une telle mobilisation du plateau mobile 5 à l'aide de cames identiques a été décrit dans le brevet britannique No 1.071.940. En outre, le second plateau 5 est, de préférence, réalisé en un matériau opaque aux rayons X pour protéger du rayonnement des magasins contenant du film vierge ou exposé, pouvant être disposés, en partie au moins, sous ce plateau 5.

Ces cames 7, 8 dont la section est, par exemple, composée de deux demi-cercles de rayons différents et de transitions entre eux, sont destinées à être entraînées simultanément en rotation autour de leurs axes parallèles, disposés, de préférence, symétriquement, à l'axe transversal du second plateau 5.

En outre, l'une des paires de cames 7, 8 est légèrement angulairement décalée par rapport à l'autre. On obtient ainsi un pressage progressif de la feuille de film 50 entre les écrans renforçateurs 4 et 6, lorsqu'elle est en position d'exposition, qui est effectuée alors à partir de l'une des extrémités des plateaux presseurs 3, 5 ce qui assure une meilleure évacuation de l'air de la zone comprise entre les écrans renforçateurs 4, 6 et donc une meilleure qualité du cliché radiographique.

Le boîtier 1 contient également un magasin d'alimentation 22 en feuilles de film vierge et un magasin récepteur 23 de clichés exposés. Le magasin d'alimentation 22 comporte une partie plane 24 comprise entre une paroi supérieure 25 et une paroi inférieure 26, située au-dessous de la section d'exposition 100 et une partie semi-cylindrique 27. Cette partie semi-cylindrique 27 n'est en fait constituée que par un fond 28 recourbé en forme de demi-cylindre situé dans le prolongement de la paroi inférieure 26 de la partie plane 24. Il n'est en effet pas nécessaire de prolonger la paroi supérieure 25 du magasin 22, car, du fait de leur propre galbe, les films non exposés 30 viennent automatiquement s'appuyer contre le fond 28. Ce fond est, soit fixé en 29 à la paroi du boîtier 1, soit constitué par la face interne de la paroi 51 due boîtier 1, dont l'épaisseur dans cette partie est alors telle que l'extrémité du paquet de feuilles de film 30 se trouve sensiblement au niveau de la zone comprise entre les plateaux 3 et 5.

De plus, ia paroi supérieure 25 du magasin d'alimentation 22 comporte une fente 31 dans laquelle pénètre une partie du dispositif d'extraction qui sera décrit par la suite, pour que cette partie puisse s'appuyer contre la feuille supérieure du paquet de feuilles de film vierge 30 empilées.

Le magasin récepteur 23 est analgue au magasin d'alimentation 22. Il comporte une partie plane 32 située en dessous de la section d'exposition 100 et en partie en dessous de la partie plane 24 du magasin d'alimentation 22 et une partie semi-cylindrique 33 constituée par un fond 34 recourbé, fixé en 35 à la paroi 52 du boîtier 1 ou par le face interne de cette paroi 52. Les parois latérales des deux magasins sont constituées par celles 17 du boîtier 1.

Entre la partie semi-cylindrique 27 du magasin d'alimentation 22 et les plateaux presseurs 3, 5 se trouve un mécanisme de transfert du film vers la station d'exposition 100 comprenant une première paire de galets moteurs 36, supportés par un premier axe 37 et un premier cylindre presseur 38. Les galets moteurs 36 entraînant la feuille de film par ses deux bords latérales peuvent être remplacés par un cylindre unique en contact avec le film sur toute sa largeur.

A l'autre extrémité de la station d'exposition 100, c'est-à-dire à l'entrée du magasin récepteur 23, se trouve un dispositif d'éjection de la feuille de film exposée, qui comprend une seconde paire de galets moteurs 39, supportés par un second axe 40 et un second cylindre presseur 41 supporté par un autre axe 42. Ce second axe 40 est légèrement décalé vers le fond du boîtier 1 par rapport au premier axe 37, c'est-à-dire que le second axe 40 est plus éloigné du couvercle 2 que le premier 37, afin que la circonférence des seconds galets 39 soit tangente au plan du second écran renforçateur 6 lorsque le plateau mobile 5 est écarté du plateau fixe 3. D'autre part, contrairement à l'axe du premier cylindre presseur 38 qui est fixe, celui du second cylindre 41 est, de préférence, déplaçable parallèlement à la direction de translation du plateau presseur mobile 5 afin de permettre au cylindre 41 de venir s'appuyer contre les galets 39, lorsque les plateaux sont écartés l'un de l'autre, ou de s'en éloigner, lorsque les plateaux sont pressés l'un contre l'autre. A cette fin, l'axe 42 du second cylindre 41 est supporté par des paliers qui sont mobiles, dans le sens des déplacements du plateau mobile 5, sur les parois latérales 17 du boîtier 1. Ces paliers sont respectivement couplés chacun à l'une des extrémités d'un levier articulé sensiblement au milieu sur un pivot fixé à l'une des parois latérales 17. L'autre extrémité de ce levier est mû par un ressort de rappel dans le sens de lécartement de l'axe 42 des galets 39 de façon à être mise en contact permanent avec une autre came solidaire de l'axe 10 portant la paire de cames 8 agissant sur le plateau presseur mobile 5. Ces paliers, leviers, pivot et autres cames n'ont pas été représentés sur la figure. La forme de ces autres cames et leurs positions angulaires par rapport aux cames 8 montées sur le même axe, sont choisies de manière à provoquer le rapprochement du second cylindre presseur 41 des galets d'éjection 39, sensiblement au début de l'écartement du plateau mobile 5 par rapport au plateau fixe 3 et son écartement, avant que le feuille suivante de film vierge ait été entièrement transférée entre ces plateaux 3, 5.

Comme les axes des paires de cames 7, 8, ceux des galets moteurs 36, 39 et du premier cylindre presseur 38 sont supportés par des paliers (non représentés) respectivement fixés aux parois latérales 17 opposées du boîtier 1.

Immédiatement derrière le dispositif éjecteur se trouve une butée 43 destinée à arrêter la feuille de film lorsqu'elle est amenée en position d'exposition.

On va maintenant décrire le dispositif d'extraction 45 des feuilles de film hors du magasin d'alimentation.

Ce dispositif 45 comporte une crémaillère 46 rectiligne fixée sous le plateau presseur mobile 5 et dont les engrenages sont orientés parallèlement à la direction des dèplacements de celui-ci. Cette crémaillère 46 est en prise avec un pignon 47 dont l'axe tournant 48 est mobile uniquement dans la direction parallèle à celle du déplacement du plateau 5. Cet axe 48 est couplé, par l'intermédiaire d'un dispositif anti-retour (non représenté), à celui d'un galet 49, dit d'extraction, dont la circonférence est recouverte d'un matériau (genre caoutchouc naturel ou synthétique) présentant un coefficient de frottement élevé par rapport à la feuille de film. L'axe du galet 49 doit être logé dans des paliers (non représentés) mobiles par rapport aux parois latérales 17 du boîtier 1 dans une direction parallèle aux mouvements du plateau mobile 5 pour pouvoir être poussé en direction de la pile 30 qui s'amincit avec chaque prise de cliché. Dans le mode de réalisation préféré, l'axe du galet 49 est creux et supporté coaxialement par celui 48 du pignon 47 autour duquel il peut tourner. Cet axe 48 est supporté à l'aide de paliers (non représentés), montés mobiles dans la direction normale aux plateaux 3, 5, sur les parois latérales opposées 17 du boîtier 1. Ces paliers respectifs, dans lesquels tournent librement les extrémités opposées de l'axe 48 du pignon 47, sont montés, par exemple, dans des coulisseaux guidés dans leurs déplacements par des glissières (non représentés). De plus, grâce à une paire de ressorts (non représentés) cet aze 48 est constamment poussé en direction du paquet de feuilles de films 30 de sorte que le galet 49 qui pénètre dans la fente 31 pratiquée dans la paroi supérieure 25 du magasin d'alimentation 22, est constamment appuyé contre la feuille de film supérieure de la pile 30. Grâce au dispositif anti-retour, le galet 49 ne peut tourner que dans le sens indiqué par la flèche de façon à pousser, par sa rotation, l'une des extrémités de la feuille supérieure de film entre la première paire de galets moteurs 36 et le premier cylindre presseur 38.

Les mécanismes d'entraînement des différents éléments mobiles du changeur n'ont pas été mentionnés jusqu'ici, car, dans un mode préféré de réalisation de l'invention, ces mécanismes ainsi que les organes de commande ou de mesure nécessaires au fonctionnement du changeur sont tous placés à l'extérieur du boîtier 1 qui ne comporte que les éléments constitutifs décrits précédemment. Dans ce mode de réalisation, les axes des paires de cames 7, 8 et des paires de galets 36, 39 traversent au moins l'une des parois latérales 17 du boîtier 1, qui les supportent, et sont munis à leurs extrémités extérieures à celui-ci, de moyens de couplage ou de pièces de transmission. Le boîtier 1, les éléments qu'il contient et ces pièces de transmission constituent un ensemble amovible et interchangeable, dite cartouche, qui vient s'adapter sur une partie fixe comprenant les organes d'entraînement, de commande et de mesure.

Cette partie fixe du changeur qui ne fait pas partie de l'invention et qui est à la portée de l'homme de l'art ne sera pas décrite de façon détaillée. On remarquera ici que la partie d'entraînement peut, grâce à l'invention, être réalisée de manière très simple à l'aide d'un seul moteur et d'un système d'engrenages, par exemple, et où les moyens de couplage des axes des parties tournantes s'adaptent à des axes entraînés par ce moteur. Dans le cas le plus simple, ce moteur tourne de façon ininterrompue pendant toute la durée d'une série de prises de vue comprenant plusieurs clichés.

Le chargement du magasin d'alimentation en feuilles de film vierges et le déchargement du magasin récepteur peuvent se faire manuellement en chambre noire. Toutefois pour éviter toute manipulation néfaste du film, le changeur selon l'invention est, de préférence, prévu pour venir s'adapter, d'une part, à une machine de chargement automatique en feuilles de film du magasin d'alimentation 22 et, d'autre part, à une machine de développement automatique des feuilles de film exposées contenues dans le magasin récepteur 23.

Dans ce but, les parois latérales 51, 52 auxquelles sont fixés ou dont les faces internes constituent les fonds semi-cylindriques des magasins 22, 23, sont agencées de façon à pouvoir pivoter autour de charnières 53, 54 et être maintenues en position de fermeture par des moyens classiques, tels que des crochets (non représentés), fixés par exemple en 55 et 56 sur la partie supérieure du boîtier 1.

Dans une autre forme de réalisation, le chargement ou le déchargement des feuilles de film se fait en enlevant l'une des parois latérales planes 17. Dans ce cas, les piles de feuilles de film vierge peuvent être introduites à plat dans la partie plane du magasin d'alimentation et on prévoit un dispositif manuel ou automatique pour pousser le paquet de feuilles de film (vers la gauche sur la figure), afin d'amener son bord avant à proximité des galets 36 et du cylindre 38 du mécanisme de transfert (d'introduction) du film entre les plateaux 3, 5.

Le changeur que nous venons de décrire fonctionne de la manière suivante:

Lorsque l'on désire prendre une série de clichés on met en place la cartouche chargée en feuilles de film vierges, empilées.

Les moyens de couplage des axes sortant du boîtier 1 viennent alors s'adapter aux organes d'entraînement de la partie fixe du changeur. Sur commande de l'opérateur, le moteur se met en marche de façon à entraîner simultanément les paires de galets 36, 39 et les paires de cames 7, 8.

Le plateau presseur mobile 5 qui se trouvait initialement en position haute, commence à descendre avec la crémaillère 46. Au cours de la descente du plateau mobile 5, le second cylindre presseur 41 est écarté de la seconde paire de galets 39. En descendant, la crémaillère 46 entraîne en rotation le pignon 47 ainsi que le galet 49, dans le sens indiqué par la flèche. Le galet 49 qui se trouve en permanence au contact de la feuille de film supérieure de la pile 30, pousse celle-ci entre la première paire de galets 36 et le cylindre 38 qui l'amènent dans sa position d'exposition, jusqu'à ce que le bord avant de la feuille arrive au contact de la butée 43. Le plateau 5 remonte alors et vient presser la feuille de film 50 entre les écrans renforçateurs. Au cours de ce mouvement, la crémaillère 46 entraîne le pignon 47 dans l'autre sens, mais grâce au dispositif antiretour le galet 49 reste immobile. La feuille de film ayant été exposée aux rayons X, le plateau mobilie 5 amorce sa redescente et le cylindre presseur 41 descend également et appuie le bord avant du film contre la seconde paire de galets 39 qui tourne en permanence. La feuille de film est alors éjectée dans le magasin récepteur 23 en passant sous la butée 43. Du fait de son galbe propre, la feuille de film éjectée vient s'appuyer contre le fond semi-cylindrique 34 du magasin laissant ainsi la place pour une autre feuille.

Pour éviter que le mouvement de la feuille de film vierge soit gêné par celle en cours d'éjection on fait tourner la seconde paire de galets 39 à une vitesse légèrement supérieure à celle de la paire de galets 36.

On peut prévoir un dispositif de freinage de la feuille de film vierge en fin de course pour s'assurer qu celle-ci viendra s'appuyer correctement contre la butée 43.

Le fonctionnement du changeur selon l'invention peut se poursuivre jusqu'a épuisement des feuilles de film contenues dans le magasin d'alimentation 22. Lorsque l'on désire avoir la possibilité de suspendre ou d'arrêter la prise de clichés d'une série, on peut prévoir un levier (non représenté sur la figure) dont une extrémité est liée à l'axe 48 du pignon 47 supportant celui du galet d'extraction 49 ou aux coulisseaux de palier supportant les extrémités opposées de cet axe 48. Ce levier peut agir de l'extérieur sur une extrémité de l'axe 48 sortant du boîtier 1 ou il peut être articulé à l'intérieur de celui-ci et être muni à une extrémité d'un doigt traversant la paroi latérale 17. Il peut être actionné, par exemple, à l'aide d'un électro-aimant diposé dans la partie fixe du changeur. Lorsque l'on actionne ce levier, on déplace l'axe 48 commun du pigon 47 et du galet d'extraction 49 en direction du plateau presseur mobile 5. Le galet 49 est alors écarté de la feuille supérieure de la pile de film vierge. Comme il n'est plus en contact avec la pile de feuilles de film, celles-ci cessent d'être amenées en position d'exposition par le mouvement descendant du plateau mobile 5.

Le dessus amovible 2 du boîtier 1 permet d'accéder à l'intérieur de celui-ci, par exemple, pour le nettoyage ou le changement des écrans renforçateurs 4, 6.

Le changeur selon l'invention permet, par exemple, de prendre jusqu'à quatre clichés par seconde, d'utiliser plusieurs formats sans encombrement supplémentaire, chaque cartouche amovible (interchangeable) étant associée à un format.

Il est de plus très maniable, le poids d'une cartouche ne dépassant pas 6 kg, et peu emcombrant, les dimensions des cartouches sont de l'ordre de 48 par 70 cm.

Il perment, en outre, un passage aisé de la radioscopie à la radiographie en enlevant ou en déplaçant la cartouche, pour permettre aux rayons X d'atteindre sans atténuation l'écran d'entrée d'un amplificateur de luminance placé immédiatement en dessous. Sa mise en place et son écartement peut être manuelle ou mécanisée.

## Revendications

1. Changeur de feuilles de film nu, précoupé pour appareil de radiodiagnostic, comportant: un magasin d'alimentation (22) en film vierge; un dispositif d'extraction (45) de l'une des feuilles empilées (30) du magasin d'alimentation (22); une section d'exposition (100) comprenant deux plateaux presseurs (3, 5) munis sur leurs faces en regard d'écrans renforçateurs (4, 6), dont l'un (3) est fixe et l'autre (5) mobile dans une direction sensiblement normale aux plateaux (3, 5); un dispositif de transfert (36—38) de la feuille de film extraite du magasin d'alimentation (22) entre les deux plateaux (3, 5), lorsqu'ils sont écartés l'un de l'autre; et un dispositif d'éjection (39—42) des clichés exposés dans un magasin récepteur (23), situé dans un boîtier (1) étanche à la lumière, caractérisé en ce que le dispositif d'extraction (45) est entraîné de façon intermittente à l'aide de moyens de couplage (46—47) qui le réunissent au plateau mobile (5), dont un élément (46) est solidaire de ce dernier et qui transforment le mouvement de va-et-vient rectiligne du plateau mobile (5), en un mouvement de rotation intermittent qui se produit uniquement lors de chaque mouvement d'écartement de celui-ci par rapport au plateau fixe (3), afin de présenter alors la feuille supérieure de la pile (30) au dispositif de transfert (36—38).

2. Changeur de feuilles de film suivant la revendication 1, caractérisé en ce que l'élément des moyens de couplage (46—47) qui est solidaire du plateau mobile (5), est constitué par une crémaillère rectiligne (46) qui s'engrène avec un pignon (47) tournant autour d'un axe (48) perpendiculaire aux directions respectives des mouvements du plateau mobile (5) et du film.

3. Changeur de feuilles de film suivant la revendication 2, caractérisé en ce que le pignon (47) est couplé au moyen d'un dispositif antiretour à un galet (49) dont le pourtour agit par frottement sur l'une des faces de la feuille supérieure de la pile de film vierge (30) dont une partie au moins est située sous le plateau mobile (5).

4. Changeur de feuilles de film suivant la revendication 3, caractérisé en ce que le galet (49) est monté sur un axe mobile en translation parallèlement à la direction des mouvements du plateau mobile (5), le galet (49) étant maintenu en contact avec la feuille supérieure de la pile (30) à l'aide de moyens élastiques agissant sur cet axe.

5. Changeur de feuilles de film suivant l'une des revendications 3 et 4, caractérisé en ce que le pignon (47) est monté sur un axe (48) mobile en translation parallèlement à la direction des mouvements du plateau mobile (5), cet axe (48) étant mû en direction de la pile (30) à l'aide de moyens élastiques, et en ce que l'axe du galet (49) est creux et monté sur l'axe (48) du pignon (47) qui le supporte.

6. Changeur de feuilles de film suivant la revendication 5, caractérisé en ce que les moyens élastiques sont constitués par des ressorts agissant respectivement sur les extrémités opposées de l'axe (48) mobile du pignon (47) supportant celui du galet (49).

7. Changeur de feuilles de film suivant l'une des revendications 5 et 6, caractérisé en ce qu'il comporte, en outre, un dispositif d'arrêt couplé à l'axe mobile (48) du pignon (47) de façon à écarter le galet (49) de la feuille de film supérieure de la pile (30).

8. Changeur de feuilles de film suivant la revendication 7, caractérisé en ce que le dispositif d'arrêt comporte un levier dont une extrémité est couplé à l'axe (48) du pignon (47) et dont l'autre extrémité est mûe à l'aide d'un électro-aimant.

9. Changeur de feuilles de film suivant l'une quelconque des revendications précédentes, caractérisé en ce que le magasin d'alimentation (22) et le magasin récepteur (23) se composent chacun d'une partie plane (24, 32) située au-dessous des plateaux (3, 5) de la section d'exposition (100) et d'une partie sensiblement semi-cylindrique (27, 33) dont l'extrémité opposée à la partie plane (24, 32) se trouve à proximité respectivement du dispositif de transfert (36—38) du film vers la station d'exposition et du dispositif d'éjection (39—42).

10. Changeur de feuilles de film suivant la revendication 9, caractérisé en ce que les parties semi-cylindriques respectives du magasin d'alimentation (27) et du magasin récepteur (33) se composent seulement de fonds (28, 34) recourbés, fixés respectivement aux parois latérales (51, 52) opposées du changeur, ou qui sont constituées par les faces internes de celles-ci, les piles de feuilles de film vierge ou exposé venant s'appuyer contre ces surfaces courbes.

11. Changeur de feuilles de film suivant la revendication 10, caractérisé en ce que ces parois latérales (51, 52) auxquelles sont fixés, ou qui constituent, les fonds semi-cylindriques des magasins d'alimentation (22) et récepteur (23), sont montées pivotables sur le boîtier (1) afin de permettre leur ouverture pour le chargement et le déchargement de ces magasins.

12. Changeur de feuilles de film suivant l'une des revendications 9 et 10, caractérisé en ce que l'une de ses parois latérales (17) parallèles à la direction de transport des feuilles de film est amovible pour permettre le chargement et le déchargement de ces magasins.

13. Changeur de feuilles de film suivant l'une quelconque des revendications précédentes, caractérisé en ce que le mouvement du plateau presseur mobile (5) est assuré par deux paires de cames identiques (7, 8), disposées symétriquement à l'axe transversale du plateau mobile (5), et légèrement décalées angulairement l'une par rapport à l'autre afin de permettre un serrage progressif de la feuille de film en position d'exposition à partir de l'une des extrémités du plateau mobile (5).

14. Changeur de feuilles de film suivant l'une quelconque des revendications précédentes, caractérisé en ce que le dispositif de transfert (36—38) des feuilles de film extraites du magasin d'alimentation (22) vers la station d'exposition (100) et le dispositif d'éjection (39—42) des feuilles vers le magasin récepteur (23), sont constitués chacun d'une paire de galets moteurs (36, 39) tournant en permanence, lorsque le changeur fonctionne, et d'un cylindre presseur (38, 41), le cylindre presseur (41) du dispositif d'éjection (39—42) pouvant être écarté de lapaire de galets moteurs (39), associés, lorsque la feuille de film est amenée en position d'exposition et ramené au contact de ces galets (39) pour l'éjection du film exposé.

15. Changeur de feuilles de film suivant la revendication 14, caractérisé en ce que le cylindre presseur (41) est porté des paliers mobiles, respectivement couplés à des leviers actionnés par des cames solidaires de l'axe (10) de l'une des paires de cames (8) agissant sur le plateau mobile (5).

16. Changeur de feuilles de film suivant l'une des revendications 14 et 15, caractérisé en ce que la paire de galets moteurs (39) du dispositif d'éjection tourne à une vitesse supérieure à celle de la paire de galets (36) du dispositif de transfert.

17. Changeur de feuilles de film suivant l'une quelconque des revendications précédentes, caractérisé en ce qu'il se compose d'une cartouche amovible et interchangeable, formée d'un boîtier (1) étanche à la lumière contenant les magasins d'alimentation et récepteur, les plateaux pesseurs et les dispositifs d'extraction, de transfert et d'éjection, et une partie dite fixe à laquelle vient s'adapter la cartouche amovible et qui comporte des moyens d'entraînement du plateau presseur mobile (5) et des dispositifs de transfert et d'éjection, ainsi que des dispositifs de commande et de mesure assurant le fonctionnement du changeur.

18. Changeur de feuilles de film suivant la revendication 17, caractérisé en ce que les moyens d'entraînement de la partie fixe comportent des moyens de couplage qui s'adaptent à des moyens de couplage dont sont munies les extrémités respectives des axes et/ou leviers qui sortent du boîtier (1) de la cartouche.

19. Changeur de feuilles de film suivant l'une des revendications 17 et 18, caractérisé en ce qu'une cartouche est prévue pour chaque format de feuilles de film.

20. Changeur de feuilles de film selon l'une quelconque des revendications précédentes, caractérisé par le fait que l'entraînement du plateau presseur mobile et des dispositifs de transfert et d'éjection est assuré par un moteur unique et à l'aide de moyens de transmission.

21. Appareil de radiodiagnostic, caractérisé par le fait qu'il comporte un changeur de feuilles de film selon l'une quelconque des revendications précédentes.

## Patentansprüche

1. Filmfolienwechsler zum Wechseln von Folien eines bloßen, vorgeschnittenen Films für Radiodiagnosegerät, enthaltend: ein Zuführungsmagazin (22) für unbestrahlten Film; eine Entnahmevorrichtung (45) zur Entnahme einer der aufeinandergestapelten Folien (30) aus dem Zuführungsmagazin (22); einen Bestrahlungsabschnitt (100) mit zwei Druckplatten (3, 5), die auf ihren einander gegenüberliegenden Oberflächen mit Versteifungsschirmen (4, 6) versehen sind, wovon ein (3) feststehend und die andere (5) in einer Richtung im wesentlichen senkrecht zu den Platten (3, 5) bewagbar ist; eine Überführungsvorrichtung (36—38) zur Überführung der aus dem Zuführungsmagazin (22) entnommenen Filmfolie zwischen die zwei Platten (3, 5), wenn diese voneinander entfernt sind; und eine Auswurfvorrichtung (39—42) zum Auswerfen der bestrahlten Klischees in ein Aufnahmemagazin (23), das in einem lichtdichten Gehäuse (1) angeordnet ist, dadurch gekennzeichnet, daß die Entnahmevorrichtung (45) intermittierend angetrieben ist durch Kopplungsmittel (46—47), die sie mit der bewegbaren Platte (5) verbinden, wovon ein Element (46) mit letzterer fest verbunden ist, wobei diese die geradlinige Hin- und Herbewegung der bewegbaren Platte (5) in eine intermittierende Rotationsbewegung umformen, die nur bei jeder Entfernungsbewegung derselben in bezug auf die feststehende Platte (3) auftritt, damit die oberste Folie des Stapels (30) dann der Überführungsvorrichtung (36—38) angeboten wird.

2. Filmfolienwechsler nach Anspruch 1, dadurch gekennzeichnet, daß dasjenige Teil der Kopplungsmittel (46—47), das fest mit der bewegbaren Platte (5) verbunden ist, aus ener geradlinigen Zahnstange (46) gebildet ist, die mit einem Ritzel (47) kämmt, das sich um eine Achse (48) dreht, die senkrecht zu den Bewegungsrichtungen der bewegbaren Platte (5) bzw. des Filmes ist.

3. Filmfolienwechsler nach Anspruch 2, dadurch gekennzeichnet, daß das Ritzel (47) durch eine Rückbewegungs Sperrvorrichtung mit einer Rolle (49) gekoppelt ist, deren Umfangsfläche über Reibung auf die eine Seite der obersten Folie des unbestrahlten Filmstapels (30) einwirkt, wovon sich wenigstens ein Teil unter der bewegbaren Platte (5) befindet.

4. Filmfolienwechsler nach Anspruch 3, dadurch gekennzeichnet, daß die Rolle (49) auf einer Achse gelagert ist, die mit einer Translationsbewegung parallel zur Richtung der Bewegungen der bewegbaren Platte (5) bewegbar ist, wobei die Rolle (49) mit der obersten Folie des Stapels (30) mittels elastischen, auf diese Achse einwirkenden Mitteln in Berührung gehalten ist.

5. Filmfolienwechsler nach Anspruch 3 oder 4, dadurch gekennzeichnet, daß das Ritzel (47) auf einer Achse (48) gelagert ist, die mit einer Translationsbewegung parallel zur Richtung der Bewegungen der bewegbaren Platte (5) bewegbar ist, wobei diese Achse (48) durch elastische Mittel in Richtung zu dem Stapel (30) bewegt wird, und daß die Achse der Rolle (49) hohl und auf der Achse (48) des darauf gelagerten Ritzels (47) gelagert ist.

6. Filmfolienwechsler nach Anspruch 5, dadurch gekennzeichnet, daß die elastischen Mittel durch Federn gebildet sind, die auf die einander gegenüberliegenden Enden der bewegbaren Achse (48) des Ritzels (47), welche die Achse der Rolle (49) lagert, einwirken.

7. Filmfolienwechsler nach Anspruch 5 oder 6, dadurch gekennzeichnet, daß er ferner eine an die bewegbare Achse (48) des Ritzels (47) angekoppelte Sperrvorrichtung umfaßt, derart, daß die Rolle (49) von der obersten Filmfolie des Stapels (30) entfernt wird.

8. Filmfolienwechsler nach Anspruch 7, dadurch gekennzeichnet, daß die Sperrvorrichtung einen Hebel umfaßt, dessen eines Ende an die Achse (48) des Ritzels (47) angekoppelt ist und dessen anderes Ende durch einen Elektromagneten bewegt ist.

9. Filmfolienwechsler nach einem der vorstehenden Ansprüche, dadurch gekennzeichnet, daß das Zuführungsmagazin (22) und das Aufnahmemagazin (23) jeweils aus einem ebenen Teil (24, 32), der sich unter den Platten (3, 5) des Bestrahlungsabschnittes (100) befindet, und aus einem im wesentlichen halbzylinderförmigen Teil (27, 33) zusammengesetzt sind, dessen dem ebenen Teil (24, 32) gegenüberliegendes Ende sich in der Nähe der Überführungsvorrichtung (36—38) zur Überführung des Films zur Bestrahlungsstation bzw. der Auswurfvorrichtung (39—42) befindet.

10. Filmfolienwechsler nach Anspruch 9, dadurch gekennzeichnet, daß die halbzylinderförmigen Teile des Zuführungsmagazins (27) bzw. des Aufnahmemagazins (23) lediglich aus umgebogenen Böden zusammengesetzt sind, die an den einander gegenüberliegenden Seitenwänden (51, 52) des Wechslers befestigt sind, oder durch die Innenseiten derselben gebildet sind, wobei sich die Filmfolienstapel des unbestrahlten oder bestrahlten Films gegen diese gekrümmten Oberfläche abstützen.

11. Filmfolienwechsler nach Anspruch 10, dadurch gekennzeichnet, daß die Seitenwände (51, 52), an denen die halbzylinderförmigen Böden des Zuführungsmagazins (22) und Aufnahmemagazins (23) befestigt sind bzw. welche von diesen gebildet sind, schwenkbar an dem Gehäuse (1) montiert sind, damit sie zum Füllen und Entleeren dieser Magazine geöffnet werden können.

12. Filmfolienwechsler nach Anspruch 9 oder 10, dadurch gekennzeichnet, daß eine der Seitenwände (17), die parallel zur Transportrichtung der Filmfolien ist, entfernbar ist, damit diese Magazine gefüllt und entleert werden können.

13. Filmfolienwechsler nach einem der vorstehenden Ansprüche, dadurch gekennzeichnet, daß die Bewegung der bewegbaren Druckplatte (5) durch zwei Paare von gleich ausgebildeten Nocken (7, 8) gewährleistet ist, die symmetrisch zur Querachse der bewegbaren Platte (5) angeordnet und gegeneinander um einen geringen Winkel versetzt sind, damit ein progressives Einspannen der Filmfolie in Bestrahlungsstellung ausgehend von dem einen Ende der Bewegbaren Platte (5) ermöglicht wird.

14. Filmfolienwechsler nach einem der vorstehenden Ansprüche, dadurch gekennzeichnet, daß die Überführungsvorrichtung (36—38) zur Überführung der dem Zuführungsmagazin (22) entnommenen Filmfolien zu der Bestrahlungsstation (100) und die Auswurfvorrichtung (39—42) zum Auswerfen der Folien zu dem Aufnahmemagazin (23) jeweils gebildet sind aus zwei im Betrieb des Wechslers ständig rotierenden Antriebsrollen (36, 39) und einem Druckzylinder (38, 41), wobei der Druckzylinder (41) der Auswurfvorrichtung (39—42) von den zwei zugeordneten Antriebsrollen (39) entfernt werden kann, wenn die Filmfolie in ihre Bestrahlungsstellung gebracht wird, und in Berührung mit diesen Rollen zurückgebracht werden kann, um den bestrahlten Film auszuwerfen.

15. Filmfolienwechsler nach Anspruch 14, dadurch gekennzeichnet, daß der Druckzylinder (41) von bewegbaren Lagern getragen wird, die jeweils an Hebel angekoppelt sind, welche durch Nocken betätigt sind, die fest mit der Achse (10) eines der auf die bewegbare Platte (5) einwirkenden Nokkenpaares (8) verbunden sind.

16. Filmfolienwechsler nach Anspruch 14 oder 15, dadurch gekennzeichnet, daß die zwei Antriebsrollen (39) der Auswurfvorrichtung mit einer Geschwindigkeit rotieren, die größer als diejenige der zwei Rollen (36) der Überführungsvorrichtung ist.

17. Filmfolienwechsler nach einem der vorstehenden Ansprüche, dadurch gekennzeichnet, daß er zusammengesetzt ist aus einem entfernbaren und austauschbaren Einsatz, der gebildet ist aus einem lichtdichten Gehäuse (1), welches das Zuführungsmagazin und das Aufnahmemagazin, die Druckplatten und die Entnahmervorrichtung, die Überführungsvorrichtung und die Auswurfvorrichtung enthält, sowie aus einem als feststehender Teil bezeichneten Teil, mit dem sich der entfernbare Einsatz zusammenfügt und der Mittel zum Antreiben der bewegbaren Druckplatte (5) und der Überführungs- und Auswurfvorrichtung sowie Steuer- und Meßvorrichtungen, die den Betrieb des Wechslers gewährleisten, umfaßt.

18. Filmfolienwechsler nach Anspruch 17, dadurch gekennzeichnet, daß die Antriebsmittel des feststehenden Teils Kopplungsmittel umfassen, die mit Kopplungsmitteln zusammenpassen, mit denen die jeweiligen Enden der Achsen und/oder Hebel versehen sind, die aus dem Gehäuse (1) des Einsatzes austreten.

19. Filmfolienwechsler nach Anspruch 17 oder 18, dadurch gekennzeichnet, daß ein Einsatz für jedes Filmfolienformat vorgesehen ist.

20. Filmfolienwechsler nach einem der vorstehenden Ansprüche, dadurch gekennzeichnet, daß der Antrieb der bewegbaren Druckplatte und der Überführungs- sowie der Auswurfvorrichtung durch einen einzigen Motor und durch Übertragungsmittel gewährleistet ist.

21. Radiodiagnosegerät, dadurch gekennzeichnet, daß es einen Filmfolienwechsler nach einem der vorstehenden Ansprüche umfaßt.

**Claims**

1. A film sheet changer for changing bare pre-cut film sheets adapted to be used in X-ray diagnosis apparatus, comprising a feeding magazine (22) for feeding unexposed film; an extraction device (45) for extracting from said feeding magazine (22) one of the sheets stacked (30) therein; an exposure section (100) comprising two pressure plates (3,5) provided on their respectively opposed surfaces, with reinforcing screens (4, 6), one of said pressure plates (3) being stationary and other pressure plate (5) being movable in a direction substantially perpendicular to said plates (3, 5); a transfer device (36—38) for transferring the sheet extracted from the feeding magazine (22) to a location between said two plates (3, 5) when the same are spaced from each other; and an injection device (39—42) for ejecting exposed film negatives into a receiving magazine (23), located within a light-impermeable casing (1), characterized in that the extraction device (45) is driven intermittently by coupling means (46—47) connecting said extraction device to the movable plate (5), one element (46) of said coupling device being integral with said movable plate, said coupling means being adapted to convert the rectilinear alternative motion of the movable plate (5) into an intermittent rotary motion which takes place only when said movable plate moves away from said stationary plate (3), so as then to present the uppermost sheet of the stack (30) to the transfer device (36—38).

2. A film sheet changer according to claim 1, characterized in that the element of the coupling means (46—47) which is integral with the movable plate (5) is constituted by a rectilinear rack-bar (46) meshing with a pinion (47) which rotates about an axis (48) perpendicular to the respective movements of the movable plate (5) and the film.

3. A film sheet changer according to claim 2, characterized in that the pinion (47) is coupled through an anti-return device to a roller (49) the periphery of which frictionally acts on one of the surfaces of the uppermost sheet of the stack of unexposed film (30) at least a portion of which is located under the movable plate (5).

4. A film sheet changer according to claim 3, characterized in that the roller (49) is mounted on an axis which is translationally movable in a direction parallel to the direction of the motions of the movable plate (5), said roller (49) being maintained in engagement with the uppermost sheet of the stack (30) by elastic means acting on said axis.

5. A film sheet changer according to any one of claims 3 and 4, characterized in that the pinion (47) is mounted on an axis (48) translationally movable in a direction parallel to the direction of the motions of the movable plate (5), said axis (48) being displaced in the direction of the stack (30) by elastic means, and in that the axis of the roller (59) is hollow and mounted on the axis (48) of the pinion (47) which supports it.

6. A film sheet changer according to claim 5, characterized in that the elastic means are constituted by springs acting respectively on the mutually opposed ends of the movable axis (48) of the pinion, which supports that of the roller (49).

7. A film sheet changer according to any one of the claims 5 and 6, characterized in that it further comprises a stop device coupled to the movable axis (48) of the pinion (47) so as to move the roller (49) away from the uppermost film sheet of the stack (30).

8. A film sheet changer according to claim 7, characterized in that the stop device comprises a lever one end of which is coupled to the axis (48) of the pinion (47), the other end of which is moved by the action of an electromagnet.

9. A film sheet changer according to any one of the preceding claims, characterized in that the feeding magazine (22) and the receiving magazine (23) comprise each a planar portion (24, 32) located under the plates (3, 5) of the exposure section (100) and a substantially semi-cylindrical section (27, 33) that end of the latter, which is opposite to the planar portion (24, 33) being located in the vicinity of the transfer device transferring the film to the exposure section, and in the vicinity of the ejection device (39—42), respectively.

10. A film sheet changer according to claim 9, characterized in that the respective semi-cylindrical sections of the feeding magazine (27) and the receiving magazine (23) are constituted only by the curved bottoms (28, 34) affixed respectively to the mutally opposed lateral walls (51, 52) of the changer, or constituted by the inner surfaces of the latter, the stacks of unexposed or exposed film sheets engaging said curved surfaces.

11. A film sheet changer according to claim 10, characterized in that the lateral walls (51, 52) to which are fixed, or which constitute, said semi-cylindrical bottoms of the feeding magazine (22) and the receiving magazine (23) are pivotally mounted on the casing (1), so as to allow them to be opened with a view to introducing and removing said magazines.

12. A film sheet changer according to any one of claims 9 and 10, characterized in that one of its lateral walls (17) parallel to the direction of displacement of the film sheets is removably mounted, so as to allow said magazines to be introduced and removed.

13. A film sheet changer according to any one of the preceding claims; characterized in that the movement of the movable pressure plate (5) is caused by two identical cams (7, 8) mounted symmetrically with reference to the transverse axis of the movable plate (5) and slightly offset angularly with reference to each other, so as to provide for progressive pressing of the film sheet in its exposure position from one of the ends of the movable plate (5).

14. A film sheet changer according to any one of the preceding claims, characterized in that the transfer device (36—38) for transferring the film sheets extracted from the feeding magazine (22) to the exposure station (100) and the ejection device (39—42) for ejecting the sheets towards the receiving magazine (23) are constituted each by a pair of driving rollers (36, 39) which rotate permanently when the changer is operating, and by a pressure cylinder (38, 41) the pressure cylinder (41) of the ejection device (39, 42) being adapted to be moved away from the associated pair of driving rollers (39) when the film sheet moved into its exposure position and brought into engagement with said rollers (39) with a view to ejecting the exposed film.

15. A film sheet changer according to claim 14, characterized in that the pressure cylinder (41) is mounted on movable bearings coupled respectively to levers actuated by cams integral with the axis (10) of one of the pairs of cams (8) acting on the movable plate (5).

16. A film sheet changer according to any one of claims 14 and 15, characterized in that the pair of driving rollers (39) of the ejection device rotates at a speed higher than that of the pair of rollers (36) of the transfer device.

17. A film sheet changer according to any one of the preceding claims, characterized in that it comprises a removable and replaceable cartridge constituted by a light-impermeable casing (1) enclosing the feeding and receiving magazines, the pressure plates and the extraction, transfer and ejection devices, as well as a so-called fixed portion to which the removable cartridge can be adapted, and which includes driving means for driving the movable pressure plate (5), the transfer device and the ejection device, and control and measuring devices adapted to ensure the operation of the changer.

18. A film sheet changer according to claim 17, characterized in that the driving means for driving the fixed portion comprise coupling means adaptable to coupling means provided at the respective ends of the axes and/or levers protruding outwardly from the casing (1) of the cartridge.

19. A film sheet changer according to claims 17 and 18, characterized in that one cartridge is provided for every film sheet size.

20. A film sheet changer according to any one of the preceding claims, characterized in that the movable pressure plate and the transfer and ejection devices are driven by a single motor associated to transmission means.

21. An X-ray diagnosis apparatus, characterized by the fact that it comprises a film sheet changer according to any one of the preceding claims.

0 006 780